(19) Europäisches Patentamt
European Patent Office
Office européen des brevets

(11) **EP 2 883 789 B1**

# (12) FASCICULE DE BREVET EUROPEEN

(45) Date de publication et mention
de la délivrance du brevet:
**30.03.2016 Bulletin 2016/13**

(51) Int Cl.:
***B64C 13/16*** *(2006.01)*   ***B64C 27/82*** *(2006.01)*
***G05D 1/08*** *(2006.01)*   ***B64C 27/00*** *(2006.01)*

(21) Numéro de dépôt: **14003740.9**

(22) Date de dépôt: **06.11.2014**

(54) **Procédé pour tendre à optimiser le bruit émis par un rotor auxiliaire et les performances d'un giravion, et un giravion**

Verfahren zum Versuch der Optimierung des von einem Hilfsrotor abgegebenen Lärms und der Leistungen eines Drehflüglers, und entsprechender Drehflügler.

Method for optimising the noise emitted by an auxiliary rotor and the performance of a rotorcraft, and rotorcraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2013 FR 1302877**

(43) Date de publication de la demande:
**17.06.2015 Bulletin 2015/25**

(73) Titulaire: **Airbus Helicopters**
**13725 Marignane Cedex (FR)**

(72) Inventeur: **Kelaidis, Manousos**
**13007 Marseille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 566 452     EP-A1- 1 547 919**
**EP-A2- 0 867 364     US-A1- 2012 104 156**
**US-B1- 6 290 171**

**Description**

La présente invention concerne un procédé pour tendre à optimiser le bruit émis par un rotor auxiliaire d'un giravion et les performances de ce giravion, et un giravion appliquant ce procédé.

L'invention se situe donc dans le domaine technique restreint des dérives d'aéronefs, et plus particulièrement des giravions.

Par exemple, un giravion de type hélicoptère peut comporter un unique rotor principal qui est entraîné mécaniquement par au moins un moteur. Le rotor principal assure alors la sustentation et la propulsion de l'hélicoptère.

De plus, un hélicoptère est pourvu d'un rotor auxiliaire arrière qui assure une fonction anticouple en exerçant une poussée transversale afin de compenser le couple de lacet créé par la rotation du rotor principal. Ce couple est dénommé par la suite « couple rotor » par commodité.

De plus, le rotor auxiliaire permet au pilote de contrôler les évolutions en lacet de l'hélicoptère en exerçant une poussée transversale positive ou négative.

Ce rotor auxiliaire est alors par exemple agencé sur une dérive portée par une poutre de queue de l'aéronef. On entend par « dérive » un corps aérodynamique s'étendant en élévation et étant sensiblement contenu dans un plan vertical. La dérive peut cependant être inclinée par rapport à ce plan vertical de symétrie antéropostérieur. L'expression « dérive verticale » est parfois utilisée.

On connaît un rotor auxiliaire non caréné, dénommé « rotor auxiliaire classique » par commodité. Classiquement, le rotor auxiliaire non caréné peut être monté latéralement sur une extrémité supérieure de la dérive.

Ce rotor auxiliaire non caréné est couramment utilisé. Néanmoins, il est possible d'implémenter un rotor auxiliaire caréné, connu sous la marque fenestron® par exemple.

Le rotor auxiliaire caréné comprend un rotor agencé dans une veine ménagée dans la dérive d'un hélicoptère. L'axe de symétrie de la veine est sensiblement perpendiculaire au plan vertical de symétrie antéropostérieur de l'hélicoptère.

Par suite, la structure profilée de la dérive verticale de l'hélicoptère entoure ladite veine et donc le rotor auxiliaire, ce qui explique cette dénomination de « rotor auxiliaire caréné ». On note que cette structure profilée est généralement dénommée « carène » par l'homme du métier. On nomme un tel rotor « rotor caréné » par commodité.

Indépendamment du caractère caréné ou non caréné du rotor auxiliaire, la dérive participe au contrôle du mouvement en lacet. En effet, la dérive génère une portance transversale durant un vol d'avancement de l'hélicoptère. Plus la vitesse d'avancement de l'hélicoptère est importante, plus cette portance transversale est importante.

Un rotor auxiliaire caréné ou non caréné permet donc de contrôler le mouvement en lacet d'un giravion. Cependant, un rotor auxiliaire peut être à l'origine d'un bruit plus ou moins important en fonction de la phase de vol du giravion.

Le document FR 2,338,845 fait référence à un hélicoptère muni d'un rotor entraîné par un moteur.

Ce document FR 2,338,845 prévoit alors « le contrôle en lacet de l'hélicoptère par une hélice carénée à pas fixe entraînée par le moteur, et dont la poussée est modulée par des aubages orientables situées dans une veine de l'hélice et en amont de celle-ci ». Le rotor auxiliaire est donc un rotor caréné muni d'une hélice et d'aubes disposées dans une veine du rotor caréné.

Le document EP 0867364 ,qui est considéré l'état de la technique le plus proche, suggère de réduire le bruit émis par un giravion en réduisant la vitesse de rotation d'un rotor principal, et de contrôler en conséquence un rotor auxiliaire et un élément de dérive mobile. Le pas des pales du rotor auxiliaire et l'angle d'attaque de l'élément de dérive mobile sont déterminés à partir d'une vitesse air et du couple exercé par le rotor principal.

Le document US 6290171 prévoit un dispositif pour commander un système anticouple mixte qui est destiné à contrecarrer le couple induit par un rotor principal d'avance et de sustentation d'un hélicoptère et qui comprend :

- « un rotor auxiliaire anticouple, commandable et exerçant une poussée latérale anticouple ; et
- au moins une surface aérodynamique de direction, commandable et engendrant une portance transversale anticouple. »

Ce dispositif comporte « des moyens de commande :

- pour commander en priorité ladite surface aérodynamique de sorte qu'elle engendre une portance qui est représentative d'au moins une partie d'un premier ordre de commande, partie qui est susceptible d'être exécutée par ladite surface aérodynamique ; et
- pour commander ledit rotor auxiliaire de sorte que l'action combinée de ladite surface aérodynamique et dudit rotor auxiliaire est représentative d'un ordre de commande en lacet de l'hélicoptère. »

Le document EP 1547919 décrit un procédé et un dispositif pour réduire les vibrations engendrées sur la structure d'un hélicoptère. Ces vibrations résultent de l'écoulement aérodynamique en provenance d'un rotor principal qui assure la sustentation et la propulsion de l'aéronef, et de l'écoulement aérodynamique d'un flux d'air le long du fuselage. Le procédé et le dispositif utilisent alors une mesure de vibrations pour déterminer l'incidence d'une dérive afin de générer une force d'opposition aux vibrations mesurées.

Le document EP 0566452 décrit un hélicoptère comportant un unique rotor principal d'avance et de sustentation; et un système anticouple. Le système anticouple « comprend:

- un rotor auxiliaire anticouple entraîné en rotation à partir des moyens moteurs dudit rotor principal et exerçant une poussée latérale anticouple commandable; et

- au moins une surface aérodynamique de direction, commandable en orientation et engendrant une portance transversale anticouple. »

Des lors, l'hélicoptère « comporte des moyens pour commander automatiquement l'angle de braquage de ladite surface aérodynamique de direction en fonction de l'angle de pas collectif dudit rotor principal et de la vitesse d'avance dudit hélicoptère. »

Enfin, le document DE1144116 présente une dérive portant un rotor auxiliaire et un volet commandable en orientation.

On connait aussi le document US 2012/104156.

La présente invention a alors pour objet de proposer un procédé pour tendre à optimiser le bruit émis par un rotor auxiliaire d'un giravion.

L'invention concerne alors un procédé pour tendre à minimiser le bruit émis par un rotor auxiliaire d'un giravion. Ce giravion s'étend longitudinalement le long d'un premier plan antéropostérieur séparant un premier côté d'un deuxième côté du giravion. Le giravion s'étend donc latéralement du premier côté vers le deuxième côté.

De plus, le giravion est muni d'au moins un rotor principal, ce giravion étant aussi muni d'un rotor auxiliaire exerçant une poussée latérale commandable pour le contrôle du mouvement en lacet du giravion. Cette poussée est alors dirigée vers le deuxième côté pour contrer un couple généré par ledit rotor principal sur un fuselage du giravion. On entend par l'expression « cette poussée est alors dirigée vers le deuxième côté », une poussée s'exerçant selon un sens partant du rotor auxiliaire vers le premier côté.

Le giravion comprend aussi une installation motrice pour mettre en rotation le rotor principal et le rotor auxiliaire

Ce giravion comprend de plus une dérive munie au moins partiellement d'une surface aérodynamique braquable s'étendant en élévation et engendrant une portance transversale, la surface aérodynamique présentant un angle de braquage nul lorsque cette surface aérodynamique est présente dans un plan de référence dit « deuxième plan », la surface aérodynamique ayant un bord de fuite. La surface aérodynamique comporte donc un corps délimité en corde par un bord d'attaque et un bord de fuite.

La surface aérodynamique s'étend donc verticalement d'une partie basse vers une partie haute, et longitudinalement d'un bord d'attaque vers un bord de fuite. On entend par l'expression « lorsque cette surface aérodynamique est présente dans un plan de référence dit deuxième plan » la position dans laquelle se trouve la surface aérodynamique lorsqu'une corde de référence de la surface aérodynamique est présente dans le deuxième plan.

Selon ce procédé, on contrôle l'angle de braquage de la surface aérodynamique pour diriger son bord de fuite vers ledit deuxième côté afin que la surface aérodynamique présente un angle de braquage négatif par rapport au deuxième plan ou pour diriger son bord de fuite vers ledit premier côté afin que la surface aérodynamique présente un angle de braquage positif par rapport au deuxième plan, la surface aérodynamique ayant pour fonction de faire tendre le rotor auxiliaire vers au moins un point de fonctionnement prédéterminé visant à optimiser les performances du giravion et à minimiser le bruit généré par ce rotor auxiliaire, ledit contrôle de l'orientation de ladite surface aérodynamique étant réalisé au moins en fonction d'une valeur courante d'un paramètre de vitesse du giravion et d'une valeur courante d'un paramètre de puissance de ladite installation motrice.

Par convention, l'angle de braquage est considéré comme étant :

- nul lorsque la surface aérodynamique est située dans le deuxième plan,

- positif lorsque la surface aérodynamique est décalée angulairement par rapport au deuxième plan en étant tournée vers le première côté, et

- négatif lorsque la surface aérodynamique décalé angulairement par rapport au deuxième plan en étant tournée vers le deuxième côté.

De plus, on considère par convention qu'un angle de braquage positif est supérieur à un angle de braquage négatif

Par conséquent, la surface aérodynamique peut effectuer un mouvement rotatif pour présenter un angle de braquage compris entre un angle de braquage négatif minimum et un angle de braquage positif maximum.

Selon le procédé, on contrôle cet angle de braquage pour faire tendre le rotor auxiliaire vers au moins un point de fonctionnement minimisant le bruit généré par ce rotor auxiliaire. La surface aérodynamique permet ainsi de placer le rotor auxiliaire dans des conditions visant à réduire les nuisances sonores et à améliorer les performances du giravion.

En effet, l'angle de braquage est contrôlé pour optimiser la poussée générée par le rotor auxiliaire d'un point de vue confort acoustique, tout en conservant des performances acceptables pour le giravion.

Il en résulte que la poussée du rotor arrière est adaptée en fonction de la position angulaire de la surface aérodynamique. Cette adaptation vise à faire tendre ce rotor auxiliaire vers des points de fonctionnement optimisés. La surface aérodynamique permet alors d'augmenter ou de réduire la poussée générée par le rotor arrière pour satisfaire aussi bien un objectif de performance du giravion qu'un objectif acoustique.

Pour contrôler l'angle de braquage de la surface aérodynamique, le procédé utilise la valeur courante d'un paramètre de vitesse du giravion et la valeur courante d'un paramètre de puissance de ladite installation motrice.

Ce procédé s'applique aussi bien à un rotor auxiliaire caréné, qu'à un rotor auxiliaire non caréné.

Le procédé peut comporter une ou plusieurs des caractéristiques qui suivent.

Ainsi, le paramètre de vitesse est par exemple choisi dans une liste comprenant au moins : une vitesse air et une vitesse sol.

Ces vitesses air et sol sont mesurées à l'aide d'un premier système de mesure usuel. Par exemple, la vitesse air peut être déterminée à l'aide d'un tube de Pitot. De plus, la vitesse sol peut être obtenue avec un système de position connu sous l'acronyme GPS ou encore un radar doppler par exemple.

L'installation motrice comprenant par exemple au moins un moteur et une boîte de transmission de puissance interposée entre chaque moteur et le rotor principal, le paramètre de puissance peut être choisi dans une liste comprenant au moins : une puissance totale développée par ledit au moins un moteur, un couple total généré par ledit au moins un moteur, une puissance transmise à la boîte de transmission de puissance, un couple transmis à la boîte de transmission de puissance, un couple exercé sur un mât entrainant ledit rotor principal.

Ces paramètres de puissance de l'installation motrice peuvent être mesurés à l'aide d'un deuxième système de mesure usuel. Ce deuxième système de mesure peut être un système courant ayant pour fonction de déterminer soit une puissance en tant que telle, soit un couple en fonction de la nature du paramètre.

Le deuxième système de mesure peut ainsi comprendre un premier dispositif mesurant un couple transmis par un arbre tournant. Par exemple, ce premier dispositif peut être un couplemètre à roues phoniques.

Lorsque le paramètre de puissance est une puissance en tant que telle, le deuxième système de mesure peut de plus comporter un deuxième dispositif mesurant une vitesse de rotation dudit arbre, tel qu'un dispositif à roue phonique par exemple.

En outre, le deuxième système de mesure comporte une unité de calcul. L'unité de calcul détermine alors la puissance en effectuant le produit dudit couple et de ladite vitesse de rotation.

En outre, on peut agencer sur le giravion une dérive entièrement constituée de ladite surface aérodynamique, ou on agence sur ledit giravion une dérive fixe munie d'au moins un volet mobile représentant ladite surface aérodynamique ou encore on agence sur ledit giravion une dérive mobile munie d'au moins un volet mobile représentant conjointement ladite surface aérodynamique. Autrement dit, la surface aérodynamique peut être une dérive braquable éventuellement munie d'un volet braquable, ou encore un volet braquable agencé sur une dérive fixe.

En outre, selon le procédé on peut :

- positionner ladite surface aérodynamique à un faible angle de braquage négatif durant une phase de vol de descente à une vitesse du giravion réduite, par exemple un angle compris entre -15 degrés et 0 degrés,

- positionner ladite surface aérodynamique à un fort angle de braquage négatif durant une phase de vol de descente à une vitesse du giravion élevée ou en autorotation, par exemple un angle de -15 degrés

- positionner ladite surface aérodynamique à un angle de braquage positif durant une phase de vol de montée par exemple un angle de 35 degrés.

En effet, lorsque la surface aérodynamique présente un angle de braquage négatif, on diminue la portance latérale de la dérive pour diminuer le couple s'additionnant au couple exercé sur le fuselage par le rotor principal. Pour compenser cette diminution de couple, il convient d'augmenter la poussée générée par le rotor auxiliaire afin de maintenir constant l'angle de lacet de l'aéronef.

A l'inverse, lorsque la surface aérodynamique présente un angle de braquage positif, on augmente la portance latérale de la dérive. Pour compenser cette augmentation de couple, il convient de diminuer la poussée générée par le rotor auxiliaire.

Dans ces conditions, le procédé tend à optimiser les performances d'un giravion et le bruit émis par ce giravion durant de multiples phases de vol.

Durant une phase de vol de croisière, une dérive d'un aéronef peut générer une portance latérale permettant de créer un couple compensant le couple exercé par le rotor principal sur le fuselage.

Le rotor arrière peut alors éventuellement être arrêté. Néanmoins, un rotor auxiliaire caréné peut alors générer un phénomène bruyant de recirculation de fluide au sein de la veine du rotor auxiliaire caréné.

L'invention propose alors placer la surface aérodynamique à un angle de braquage négatif pour diminuer la portance latérale de la dérive et requérir le fonctionnement du rotor auxiliaire. Le phénomène de recirculation de fluide est alors au moins réduit.

Ce procédé parait étonnant dans la mesure où il induit le fonctionnement du rotor auxiliaire ce qui peut paraitre pénalisant. Cependant, un faible angle négatif permet de minimiser la puissance nécessaire au fonctionnement du rotor auxiliaire, et ainsi de conserver des performances acceptables.

De plus, ce procédé permet de mettre en oeuvre une dérive ayant des dimensions importantes, en minimisant l'impact de cette dérive sur le bruit émis durant une phase de vol de croisière. Une telle dérive est intéressante. En effet, la dérive participe à l'action anticouple du rotor auxiliaire, et ainsi peut éventuellement permettre l'installation d'un rotor auxiliaire nécessitant moins de puissance par rapport à certains états de la technique. Le gain de puissance en résultant peut alors conduire à une augmentation de la charge utile du giravion.

La consommation de carburant peut aussi être optimisée.

Durant une phase de vol de descente, une dérive de dimensions importantes peut générer une portance latérale élevée sensiblement équivalente à la portance latérale développée en croisière. Néanmoins, le couple rotor tend au contraire à diminuer. Dès lors, cette portance latérale peut générer sur le fuselage un couple supérieur au couple rotor exercé par le rotor principal sur ce fuselage. Il en résulte un mouvement en lacet du giravion devant être contré en générant une poussée négative avec le rotor auxiliaire pour maintenir constant l'angle de lacet de l'aéronef.

Une telle poussée négative est génératrice de bruit, et peut nuire aux performances du giravion notamment sa pilotabilité.

L'invention propose alors de positionner la surface aérodynamique à un angle de braquage fortement négatif pour éviter la création d'un couple supérieur au couple rotor.

La surface aérodynamique peut aussi être employée à cet effet durant une phase de vol en autorotation.

Le couple rotor exercé par le rotor principal sur le fuselage est de fait faible. Dès lors, la surface aérodynamique peut être positionnée à un angle de braquage négatif important pour induire une portance latérale de la dérive faible voire nulle.

En autorotation et lors d'une descente rapide, le rotor arrière est alors principalement utilisé pour le contrôle du mouvement en lacet de l'aéronef, et non pas pour contrer une éventuelle portance latérale générée par une dérive. L'invention offre alors une marge de contrôle en lacet optimisée en utilisant le rotor auxiliaire. De plus, le bruit émis par le rotor auxiliaire peut alors être réduit en évitant notamment un fonctionnement à poussée négative.

Durant une phase de vol de montée, le rotor principal est fortement sollicité et induit un couple rotor important sur le fuselage. Ce couple rotor est classiquement contré en générant une poussée élevée avec le rotor auxiliaire. Cette poussée élevée est génératrice de bruit.

De plus, le fonctionnement du rotor auxiliaire nécessite une puissance importante. La puissance disponible pour le rotor principale est alors moindre, ce qui réduit les performances du giravion et notamment sa vitesse ascensionnelle.

A l'inverse, l'invention propose de positionner la surface aérodynamique à un angle de braquage positif durant une phase de vol de montée. Le rotor auxiliaire doit alors générer une poussée réduite par rapport à certains états de la technique ce qui permet de réduire les inconvénients précités.

En outre, la surface aérodynamique peut aussi être positionnée à un angle de braquage positif en cas de panne du rotor auxiliaire. Le couple généré par la surface aérodynamique sur le fuselage permet de compenser un couple rotor plus important. Il en résulte que l'invention peut permettre de réduire la vitesse de descente de l'aéronef. En effet, l'invention permet notamment de réduire la vitesse d'avancement de l'aéronef lors d'un atterrissage roulé faisant suite à la descente en cas de panne du rotor auxiliaire.

Par ailleurs, on peut incliner le deuxième plan par rapport au premier plan antéropostérieur pour que ce deuxième plan présente une angulation positive par rapport au premier plan antéropostérieur, le bord de fuite de la surface aérodynamique étant dirigée vers le premier côté lorsque la surface aérodynamique est présente dans le deuxième plan.

Cette caractéristique permet de conférer à la surface aérodynamique un angle positif par rapport à l'air incident durant un vol d'avancement lorsque la surface aérodynamique a un angle de braquage nul.

De même, on peut en outre conférer à la surface aérodynamique une cambrure positive, cette surface aérodynamique présentant une face cambrée dirigée vers le deuxième côté.

Par ailleurs, on peut contrôler l'orientation de la surface aérodynamique à l'aide d'une loi fournissant un angle objectif de la surface aérodynamique en fonction dudit paramètre de vitesse du giravion et dudit paramètre de puissance de l'installation motrice.

Cette loi comporte éventuellement les équations suivantes :

$$\delta_1 = \begin{cases} V < V_1 \rightarrow \delta_{max} \\ V_1 \le V < V_2 \rightarrow [sw] \cdot (A \cdot V + B) + [\delta_{max} - [sw] \cdot (A \cdot V + B)] \cdot \left\{ 1 - \left[ \sin\left(\frac{\pi}{2} \cdot \frac{V - V_1}{V_2 - V_1}\right) \right]^2 \right\} \\ V_2 \le V \rightarrow [sw] \cdot (A \cdot V + B) \end{cases}$$

$$\delta_2 = \begin{cases} W < W_1 \rightarrow \delta_{min} \\ W_1 \le W < W_2 \rightarrow \delta_1 - [\delta_1 - \delta_{min}] \cdot \left\{ \left[ \sin\left(\frac{\pi}{2} \cdot \frac{W - W_2}{W_2 - W_1}\right) \right]^2 \right\} \\ W_2 \le W \rightarrow \delta_1 \end{cases}$$

$$\delta = \begin{cases} V > V_4 \rightarrow \delta_2 \\ V_3 < V \le V_4 \rightarrow \delta_{max} - [\delta_{max} - \delta_2] \cdot \left\{ \left[ \sin\left(\frac{\pi}{2} \cdot \frac{V - V_3}{V_4 - V_3}\right) \right]^2 \right\} \\ V \le V_3 \rightarrow \delta_{max} \end{cases}$$

où :

- "$\delta$" représente l'angle objectif,

- "$\delta 1$" et "$\delta 2$" représentent des paramètres de calcul,

- "$\delta max$" et "$\delta min$" représentent respectivement un angle seuil positif et un angle seuil négatif prédéterminés,

- "V1 ", "V2", "V3", "V4" représentent des paramètres de vitesse prédéterminés,

- "V" représente la valeur courante du paramètre de vitesse,

- "W1", "W2" représentent des paramètres de puissance prédéterminés,

- "W" représente la valeur courante du paramètre de puissance,

- "SW" représente un paramètre d'ajustement prédéterminé,

- "A" et "B" représentent des variables qui sont fonction dudit paramètre d'ajustement.

"$\delta max$", "$\delta min$", "V1 ", "V2", "V3", "V4" et "W1 ", "W2" sont par exemple déterminés par le constructeur par essais et/ou par simulation pour être adaptés à un giravion particulier et/ou à une mission particulière.

Les variables "A" et "B" sont déterminées par le constructeur par essais et/ou par simulation pour induire les angles seuils prédéterminés. Par exemple, ces variables "A" et "B" sont déterminées à l'aide des formules suivantes :

$$A = 0.1 \times [sw] \text{ et } B = -21 \times [sw]$$

Selon une première réalisation, le paramètre d'ajustement est égal à une valeur prédéterminée. L'angle de braquage appliqué à la surface aérodynamique est alors égal à l'angle objectif.

Par exemple, la valeur prédéterminée vaut zéro.

La loi permet définir une unique nappe permettant de déterminer l'angle de braquage en fonction du paramètre de vitesse courant et du paramètre de puissance courant.

Cette nappe peut comporter notamment quatre zones de fonctionnement distinctes reliées par des zones de transition, à savoir :

- une première zone Z1 pour laquelle l'angle de braquage est maximal en atteignant un angle seuil positif, cette première zone étant atteinte à une vitesse d'avancement faible,

- une deuxième zone Z2 pour laquelle l'angle de braquage est maximal en atteignant l'angle seuil positif, cette deuxième zone étant atteinte à une vitesse d'avancement intermédiaire et à une puissance élevée développée par l'installation motrice,

- une troisième zone Z3 pour laquelle l'angle de braquage est positionné à une orientation moyenne, par exemple proche de zéro voire égale à zéro, cette troisième zone étant atteinte à une vitesse d'avancement élevée et à une puissance élevée développée par l'installation motrice,

- une quatrième zone Z4 pour laquelle l'angle de braquage est faible en atteignant la valeur seuil négative, cette quatrième zone étant atteinte à une vitesse d'avancement élevée et à une puissance faible développée par l'installation motrice.

Selon une deuxième réalisation :

- on détermine un angle maximal égal à l'angle objectif en appliquant ladite loi et en conférant au paramètre d'ajustement une première valeur, par exemple une première valeur égale à -1,

- on détermine un angle minimal égal à l'angle objectif en appliquant ladite loi et en conférant au paramètre d'ajustement une deuxième valeur, par exemple une deuxième valeur égale à +1,

- on mesure un pas collectif courant de pales dudit rotor auxiliaire,

- on augmente ledit angle de braquage de la surface aérodynamique en le faisant tendre vers ledit angle maximal tant que ledit pas est supérieur à un pas de consigne prédéterminé, l'angle de braquage étant borné pour être inférieur ou égal à l'angle maximal,

- on diminue ledit angle de braquage de la surface aérodynamique en le faisant tendre vers ledit angle minimal tant que ledit pas est inférieur au pas de consigne prédéterminé, l'angle de braquage étant borné pour être supérieur ou égal à l'angle minimal,

- on modifie automatiquement ledit pas en parallèle de la modification dudit angle de braquage.

La loi permet définir une nappe supérieure et une nappe inférieure permettant de déterminer respectivement un angle maximal et un angle minimal. Chaque nappe peut comporter les quatre zones décrites précédemment.

L'angle de braquage de la surface aérodynamique est alors borné par ces nappes supérieure et inférieure.

Dès lors, l'angle de braquage est déterminé en fonction du pas collectif courant des pales du rotor arrière, en étant néanmoins borné par les nappes supérieure et inférieure.

Cette deuxième réalisation vise à faire fonctionner le rotor auxiliaire à un point de fonctionnement prédéterminé. Le constructeur détermine alors le pas des pales amenant le rotor auxiliaire à ce point de fonctionnement.

Ce point de fonctionnement peut conduire le rotor auxiliaire à générer une poussée latérale positive.

Lorsque le pas collectif des pales est supérieur au pas de consigne, on augmente la portance latérale de la dérive en augmentant l'angle de braquage, à savoir en le faisant tendre vers l'angle maximal. En parallèle, un système de pilotage automatique agit sur le rotor auxiliaire pour réduire le pas collectif des pales de ce rotor auxiliaire.

Lorsque le pas collectif des pales est inférieur au pas de consigne, on diminue la portance latérale de la dérive en diminuant l'angle de braquage, à savoir en le faisant tendre vers l'angle minimal. En parallèle, un système de pilotage automatique agit sur le rotor auxiliaire pour augmenter le pas collectif des pales de ce rotor auxiliaire.

En outre, l'aéronef comportant un moyen de commande manuel du pas des pales du rotor auxiliaire, on peut inhiber la modification de l'angle de braquage lorsque le pilote manoeuvre ledit moyen de commande. La deuxième réalisation est alors inhibée.

On note qu'un même giravion peut implémenter les deux réalisations précédentes, un pilote pouvant choisir le mode de fonctionnement souhaité.

Outre un procédé, l'invention vise un giravion s'étendant longitudinalement le long d'un premier plan antéropostérieur séparant un premier côté d'un deuxième côté du giravion, ledit giravion étant muni d'au moins un rotor principal, ledit giravion étant muni d'un rotor auxiliaire exerçant une poussée latérale commandable pour le contrôle du mouvement en lacet du giravion, ladite poussée étant dirigée vers ledit deuxième côté pour contrer un couple généré par ledit rotor principal sur un fuselage du giravion, ledit giravion comprenant une installation motrice pour mettre en rotation le rotor principal et le rotor auxiliaire, ledit giravion comprenant une dérive munie au moins partiellement d'une surface aérodynamique braquable commandable en orientation et engendrant une portance transversale en s'étendant en élévation, ladite surface aérodynamique présentant un angle de braquage nul lorsque cette surface aérodynamique est présente dans un deuxième plan, ladite surface aérodynamique ayant un bord de fuite,

Ce giravion comporte alors une unité de traitement reliée à un moyen de déplacement déplaçant en rotation la surface aérodynamique, l'unité de traitement étant reliée à un premier système de mesure d'une valeur courante d'un paramètre de vitesse du giravion et à un deuxième système de mesure d'une valeur courante d'un paramètre de puissance de ladite installation motrice, ladite unité de traitement appliquant alors le procédé décrit précédemment.

Par suite, l'unité de traitement peut comporter un moyen de calcul tel qu'un processeur exécutant des instructions mémorisées dans une mémoire non volatile pour mette en oeuvre ce procédé.

L'unité de traitement communique ainsi avec le moyen de déplacement pour contrôler l'orientation de la surface aérodynamique en dirigeant son bord de fuite vers le premier côté afin que la surface aérodynamique présente un angle de braquage positif par rapport au deuxième plan ou en dirigeant son bord de fuite vers le deuxième côté afin que la surface aérodynamique présente un angle de braquage négatif par rapport au deuxième plan. A cet effet, l'unité de traitement contrôle l'angle de braquage de ladite surface aérodynamique au moins en fonction d'une valeur courante d'un paramètre de vitesse du giravion et d'une valeur courante d'un paramètre de puissance de ladite installation motrice.

Ce giravion peut alors comporter une dérive braquable représentant ladite surface aérodynamique, ou une dérive fixe munie d'au moins un volet mobile représentant ladite surface aérodynamique ou une dérive mobile munie d'au moins un volet mobile représentant conjointement ladite surface aérodynamique

De plus, le deuxième plan peut présenter une angulation positive par rapport au premier plan antéropostérieur, ledit bord de fuite étant dirigé vers ledit premier côté lorsque ladite surface aérodynamique est présente ledit deuxième plan.

En outre, le surface aérodynamique peut avoir une cambrure positive, ladite surface aérodynamique présentant une face cambrée dirigée vers le deuxième côté.

Par ailleurs, l'unité de traitement peut comporter une mémoire non volatile mémorisant une loi fournissant un angle objectif de la surface aérodynamique en fonction du paramètre de vitesse du giravion et du paramètre de puissance de l'installation motrice pour mettre la première et/ou la deuxième réalisation décrite précédemment.

De plus, le giravion peut comporter un moyen de commande manuel du pas de pales du rotor auxiliaire, le moyen de commande étant en communication avec l'unité de traitement directement ou indirectement via des dispositifs de mesure.

L'invention et ses avantages apparaîtront avec plus de détails dans le cadre de la description qui suit avec des exemples de réalisations donnés à titre illustratif en référence aux figures annexées qui représentent :

- la figure 1, un schéma d'un aéronef selon l'invention,

- la figure 2, un schéma présentant une dérive fixe portant une surface aérodynamique mobile,

- la figure 3, un schéma présentant une dérive mobile,

- la figure 4 un schéma présentant une surface aérodynamique cambrée,

- la figure 5, un schéma explicitant le positionnement d'une surface aérodynamique mobile à un angle de braquage positif ou à un angle de braquage négatif.

- la figure 6, un schéma illustrant un premier mode de réalisation, et

- la figure 7, un schéma illustrant un deuxième mode de réalisation.

Les éléments présents dans plusieurs figures distinctes sont affectés d'une seule et même référence.

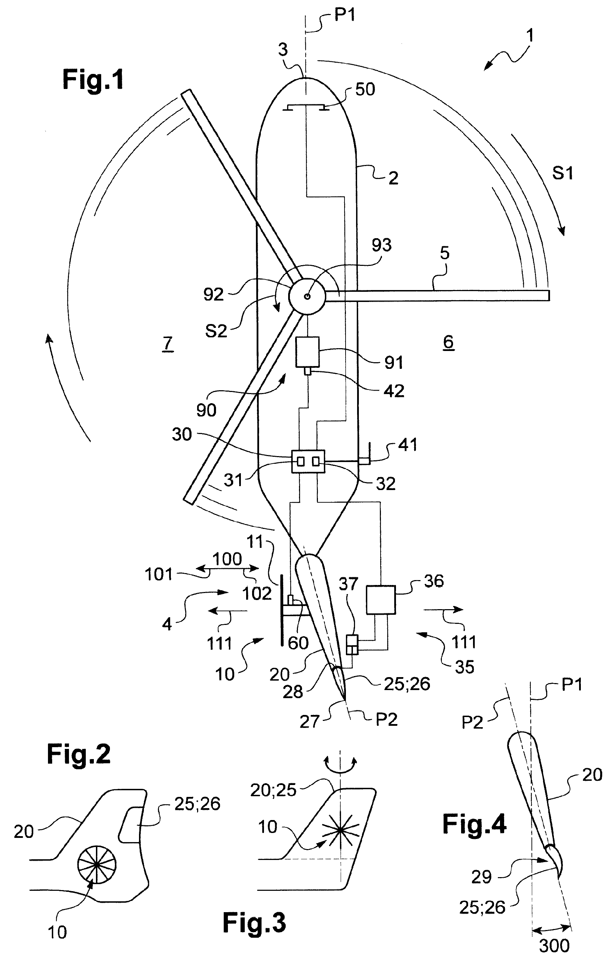

La figure 1 présente un giravion 1 muni d'un fuselage 2. Ce fuselage 2 s'étend longitudinalement le long d'un premier plan P1 antéropostérieur de symétrie d'un nez 3 vers une queue 4. Dès lors, le fuselage 2 s'étend transversalement d'un premier côté 6 vers un deuxième côté 7.

Ce fuselage 2 porte en outre au moins un rotor principal 5 assurant au moins en partie la sustentation voire la propulsion du giravion 1.

Le rotor principal 5 comprend une pluralité de pales effectuant un mouvement rotatif selon un premier sens S1. Durant ce mouvement, une pale dite usuellement « pale reculante » se déplace du premier côté 6 vers le deuxième côté 7. A l'inverse, une pale dite usuellement « pale avançante » se déplace du deuxième côté 7 vers le premier côté 6.

Ce mouvement rotatif du rotor principal induit la création d'un couple rotor en lacet sur le fuselage 2 selon un deuxième sens S2 opposé au premier sens S1. Le couple rotor tend alors à modifier l'angle de lacet du giravion.

Dans ces conditions, le giravion comprend au moins un rotor auxiliaire 10 pour contrôler le mouvement en lacet de ce giravion.

Le rotor auxiliaire 10 est usuellement agencé à une extrémité longitudinale du giravion. Ainsi, le rotor auxiliaire est agencé au niveau de la queue 4 du giravion, et notamment sur une dérive 20.

Le rotor auxiliaire peut être un rotor non caréné conformément à la figure 1 ou encore un rotor caréné.

Le rotor auxiliaire 10 génère alors une poussée latérale 100. Cette poussée latérale 100 peut être commandée à l'aide d'un moyen de commande 50 usuel, tel qu'un palonnier.

Pour contrer le couple rotor, la poussée latérale est une poussée dite « poussée positive 101 », cette poussée positive étant dirigée vers le deuxième côté 7. Le rotor auxiliaire peut aussi exercer une poussée négative 102 dirigée vers le premier côté 6

Pour entraîner le rotor principal 5 et le rotor auxiliaire 10, le giravion comprend une installation motrice 90. Cette installation motrice 90 comporte au moins un moteur 91 et une boîte de transmission de puissance 92 qui est interposée entre le rotor principal 5 et au moins un moteur 91.

Par ailleurs, le giravion 1 est muni d'une dérive comprenant au moins partiellement une surface aérodynamique 25 mobile en rotation pour engendrer une portance transversale 111, 112 réglable.

Cette surface aérodynamique 25 s'étend en élévation dans un plan sensible vertical présentant une angulation avec le premier plan P1.

Selon la variante des figures 1 2, le giravion 1 présente une dérive 20 fixe. La surface aérodynamique 25 comporte alors un volet 26 articulé à cette dérive fixe pour représenter ladite surface aérodynamique.

Selon la variante de la figure 3, le giravion comporte une surface aérodynamique incluant une dérive mobile. La dérive est entièrement mobile et représente ladite surface aérodynamique.

Selon une variante non représentée, le giravion comporte une surface aérodynamique incluant une dérive mobile portant un volet mobile.

En outre et en référence à la figure 4, la surface aérodynamique 25 comprend éventuellement une cambrure positive, la surface aérodynamique 25 présentant une face cambrée en regard du deuxième côté 7.

Indépendamment de la variante et en référence à la figure 1, la surface aérodynamique 25 présente un angle de braquage 200 qui est nul lorsqu'une corde de référence de la surface aérodynamique 25 est présente dans un deuxième plan P2. La surface aérodynamique est alors dans une position médiane, et peut être braquée de part et d'autre de cette position médiane.

On comprend que le constructeur peut déterminer par essais ou simulations la portance adéquate à fournir lorsque la surface aérodynamique est dans la position médiane pour positionner le deuxième plan P2.

L'angle de braquage est mesuré par rapport à un deuxième plan P2. Ce deuxième plan P2 peut être confondu avec le premier plan P1. Toutefois, le deuxième plan P2 peut présenter une angulation positive 300 par rapport au premier plan P1 selon la variante représentée.

La surface aérodynamique peut alors être manoeuvrée pour présenter un angle de braquage par rapport à ce deuxième plan P2.

Par convention, la surface aérodynamique 25 présente un angle de braquage positif lorsque son bord de fuite 27 s'écarte du deuxième plan P2 pour se situer du premier côté 6 du giravion, à savoir à droite du deuxième plan sur la figure 1. A l'inverse, la surface aérodynamique 25 présente un angle de braquage négatif lorsque son bord de fuite 27 s'écarte du deuxième plan P2 pour se situer du deuxième côté 7 du giravion, à savoir à gauche du deuxième plan sur la figure 1.

Pour contrôler l'angle de braquage, le giravion 1 comporte une unité de traitement 30 qui est reliée à un moyen de déplacement 35 pour déplacer en rotation la surface aérodynamique 25.

Ce moyen de déplacement 35 peut comprendre un distributeur hydraulique 36 communiquant avec l'unité de traitement, et un vérin hydraulique 37 relié au distributeur hydraulique 36 et à la surface aérodynamique 25. Le moyen de déplacement peut aussi par exemple comprendre un contrôleur électronique qui commande un actionneur électromécanique.

L'unité de traitement 30 peut comporter un processeur 31 exécutant des informations mémorisées sur une mémoire non volatile 32 pour commander le moyen de déplacement.

Par suite, l'unité de traitement 30 est reliée à un premier système de mesure 41 d'une valeur courante d'un paramètre de vitesse V du giravion 1 et à un deuxième système de mesure 42 d'une valeur courante d'un paramètre de puissance W de l'installation motrice 90.

Le paramètre de vitesse V est choisi dans une liste comprenant au moins : une vitesse air et une vitesse sol.

De plus, le paramètre de puissance est choisi dans une liste comprenant au moins : une puissance totale développée les monteurs 91 de l'installation motrice, un couple total généré par les moteurs 91 de l'installation motrice, une puissance transmise à la boîte de transmission de puissance 92, un couple transmis à la boîte de transmission de puissance 92, un couple exercé sur un mât 93 entrainant le rotor principal.

Selon le procédé appliqué, on contrôle donc l'angle de braquage de la surface aérodynamique à l'aide de l'unité de traitement 30 et du moyen de déplacement 36 en fonction d'une valeur courante d'un paramètre de vitesse V mesurée avec le premier système de mesure et d'une valeur courante d'un paramètre de puissance W mesurée avec le deuxième système de mesure.

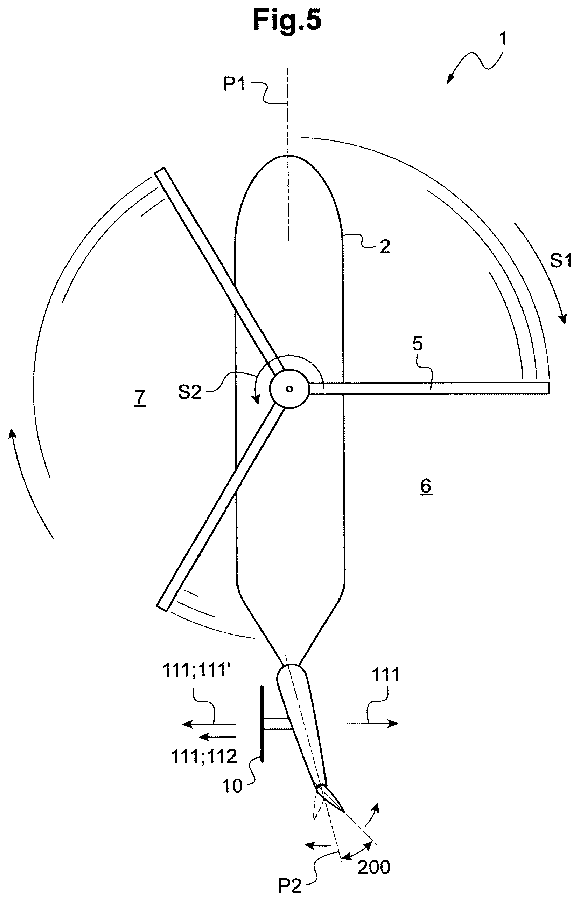

La figure 5 explicite le fonctionnement du giravion et le procédé appliqué.

Selon l'invention, on positionne la surface aérodynamique 25 à un fort angle de braquage négatif, par exemple durant une phase de vol de descente à une vitesse du giravion élevée ou en autorotation. Un angle de braquage négatif est schématisé par la surface aérodynamique dessinée en traits pointillés.

Avec un angle de braquage négatif, la surface aérodynamique tend à réduire la portance latérale générée par la dérive, conformément au vecteur 112. Le vecteur 112 de cette portance latérale 111 est dirigé vers le deuxième côté 7 et présente une longueur réduite, voire peut être dirigé vers le premier côté dans le cas d'une poussé devenant négative. A l'inverse, on positionne la surface aérodynamique 25 à un angle de braquage 200 positif durant une phase de vol de montée. Un angle de braquage positif est schématisé par la surface aérodynamique dessinée en trait plein.

Avec un angle de braquage positif, la surface aérodynamique tend à augmenter la portance latérale 111 générée par la dérive en la dirigeant vers le deuxième côté 7 pour contrer le couple rotor. Plus précisément, le vecteur 111' de cette portance latérale est dirigé vers le deuxième côté 7, et présente une longueur importante. On peut aussi positionner la surface aérodynamique 25 à un faible angle de braquage 200 négatif durant une phase de vol de descente à une vitesse du giravion réduite.

Par ailleurs, on définit une première zone Z1 de réglage pour laquelle l'angle de braquage est maximal en atteignant un angle seuil positif $\delta$max. Cette première zone Z1 est atteinte à une vitesse d'avancement inférieure à une vitesse dite troisième vitesse V3,

En outre, on définit une deuxième zone Z2 pour laquelle l'angle de braquage 200 est maximal en atteignant l'angle seuil positif $\delta$max. Cette deuxième zone Z2 est atteinte lorsque les deux conditions suivantes sont remplies :

- la vitesse d'avancement du giravion est une vitesse d'avancement intermédiaire comprise entre la troisième vitesse V3 et une vitesse dite première vitesse V1 supérieure à la troisième vitesse V3,

- la puissance développée par l'installation motrice est une puissance élevée supérieure à une puissance dite deuxième puissance W2.

L'unité de traitement positionne donc la surface aérodynamique à cet angle seuil positif $\delta$max lorsque le giravion évolue dans la première zone Z1 ou la deuxième zone Z2.

On définit de plus une troisième zone Z3 pour laquelle l'angle de braquage 200 est égal à une orientation moyenne, cette troisième zone Z3 étant atteinte à une vitesse d'avancement élevée à une puissance élevée. Cette orientation moyenne est proche de zéro en étant par exemple comprise entre -5 degrés et 5 degrés, voire en étant égale à zéro.

L'orientation moyenne est comprise entre l'angle seuil positif $\delta$max et une valeur seuil négative $\delta$min.

L'unité de traitement positionne donc la surface aérodynamique à une orientation moyenne proche de zéro lorsque les deux conditions suivantes sont remplies :

- la vitesse d'avancement du giravion est supérieure à une deuxième vitesse V2 supérieure à la première vitesse V1,

- la puissance développée par l'installation motrice est supérieure à la deuxième puissance W2.

On définit de plus une quatrième zone Z4 pour laquelle l'angle de braquage 200 est faible en atteignant une valeur seuil négative $\delta$min. Cette quatrième zone Z4 est atteinte à une vitesse d'avancement élevée et à une puissance faible développée par l'installation motrice.

L'unité de traitement positionne donc la surface aérodynamique à une valeur seuil négative $\delta$min lorsque les deux conditions suivantes sont remplies :

- la vitesse d'avancement du giravion est supérieure à une quatrième vitesse V4 comprise entre la première vitesse V1 et la troisième vitesse V3,
- la puissance développée par l'installation motrice est inférieure à la première puissance W1.

Par exemple, l'unité de traitement contrôle l'orientation de la surface aérodynamique 25 à l'aide d'une loi L fournissant un angle objectif de la surface aérodynamique 25 en fonction du paramètre de vitesse V du giravion 1 et du paramètre de puissance W. Cette loi L correspond éventuellement aux équations suivantes :

$$\delta_1 = \begin{cases} V < V_1 \rightarrow \delta_{max} \\ V_1 \leq V < V_2 \rightarrow [sw] \cdot (A \cdot V + B) + [\delta_{max} - [sw] \cdot (A \cdot V + B)] \cdot \left\{ 1 - \left[ \sin\left(\frac{\pi}{2} \cdot \frac{V - V_1}{V_2 - V_1}\right) \right]^2 \right\} \\ V_2 \leq V \rightarrow [sw] \cdot (A \cdot V + B) \end{cases}$$

$$\delta_2 = \begin{cases} W < W_1 \rightarrow \delta_{min} \\ W_1 \leq W < W_2 \rightarrow \delta_1 - [\delta_1 - \delta_{min}] \cdot \left\{ \left[ \sin\left(\frac{\pi}{2} \cdot \frac{W - W_2}{W_2 - W_1}\right) \right]^2 \right\} \\ W_2 \leq W \rightarrow \delta_1 \end{cases}$$

$$\delta = \begin{cases} V > V_4 \rightarrow \delta_2 \\ V_3 < V \leq V_4 \rightarrow \delta_{max} - [\delta_{max} - \delta_2] \cdot \left\{ \left[ \sin\left(\frac{\pi}{2} \cdot \frac{V - V_3}{V_4 - V_3}\right) \right]^2 \right\} \\ V \leq V_3 \rightarrow \delta_{max} \end{cases}$$

où :

- "$\delta$" représente l'angle objectif,

- "$\delta 1$" et "$\delta 2$" représentent des paramètres de calcul,

- "$\delta max$" et "$\delta min$" représentent respectivement l'angle seuil positif et l'angle seuil négatif prédéterminés,

- "V1 ", "V2", "V3", "V4" représentent respectivement les première, deuxième, troisième et quatrième vitesses prédéterminées par le constructeur,

- "V" représente la valeur courante du paramètre de vitesse,

- "W1", "W2" représentent respectivement la première et la deuxième puissances prédéterminées,

- "W" représente la valeur courante du paramètre de puissance,

- "SW" représente un paramètre d'ajustement prédéterminé,

- "A" et "B" représentent des variables qui sont fonction dudit paramètre d'ajustement.

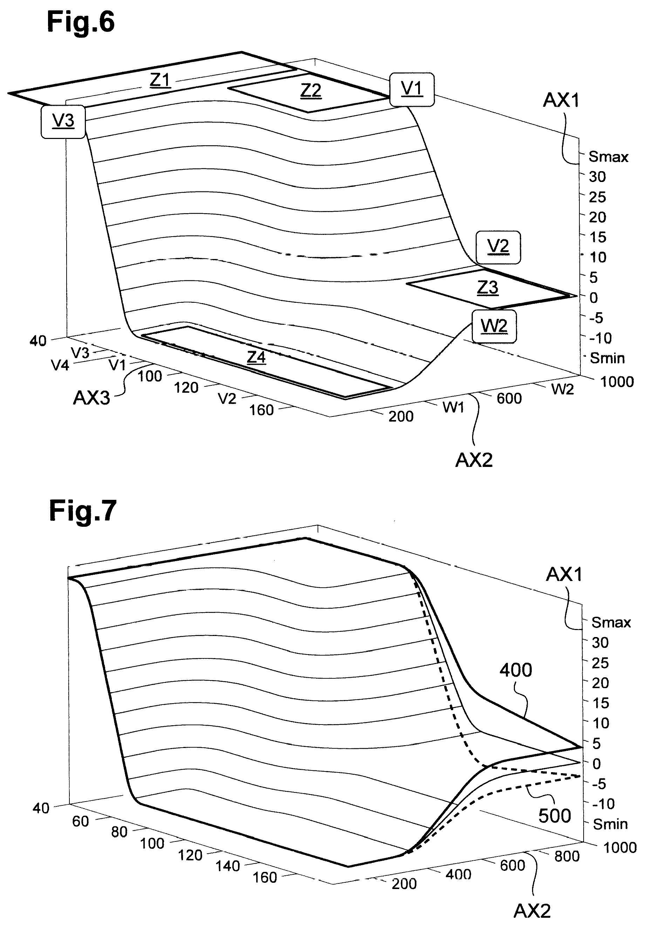

Selon la réalisation de la figure 6, le paramètre d'ajustement SW est égal à une valeur prédéterminée, par exemple 0. L'angle de braquage 200 est alors égal à l'angle objectif $\delta$.

La loi L permet alors de définir une nappe présentant l'angle de braquage selon un premier axe AX1 vertical, le paramètre de puissance W selon un deuxième axe AX2 horizontal, et le paramètre de vitesse selon un troisième axe AX3.

Cette nappe permet d'atteindre la première zone Z1, la deuxième zone Z2, la troisièmes zone Z3, la quatrième zone Z4 et des plages de transition entre ces zones.

L'unité de traitement applique alors direction la loi L pour déterminer l'angle de braquage.

La figure 7 illustre un deuxième mode de réalisation.

Selon ce deuxième mode de réalisation, l'unité de traitement détermine un angle maximal 400 égal à l'angle objectif en appliquant la loi L et en conférant au paramètre d'ajustement SW une première valeur. L'angle maximal 400 revêt alors la forme d'une nappe supérieure dans la figure 7.

De plus, l'unité de traitement détermine un angle minimal 500 égal à l'angle objectif en appliquant la loi L et en conférant au paramètre d'ajustement SW une deuxième valeur. L'angle minimal 500 revêt alors la forme d'une nappe inférieure dans la figure 7.

Ces nappes inférieure et supérieure bornent l'angle de braquage.

Dès lors, on mesure un pas collectif courant de pales 11 du rotor auxiliaire 10 à l'aide d'un dispositif de mesure du pas usuel relié à l'unité de traitement.

Par suite, l'unité de traitement contrôle un moyen de modification du pas des pales 11, tel qu'un système de pilotage automatique. L'unité de traitement requiert alors l'augmentation de l'angle de braquage 200 de la surface aérodynamique 25 en le faisant tendre vers l'angle maximal 400 tant que ledit pas est supérieur à un pas de consigne prédéterminé.

A l'inverse, l'unité de traitement requiert la diminution de l'angle de braquage 200 de la surface aérodynamique 25 en le faisant tendre vers l'angle minimal 500 tant que ledit pas est inférieur au pas de consigne prédéterminé.

En parallèle, le système de pilotage automatique modifie automatiquement ledit pas en parallèle de la modification de l'angle de braquage 200, pour compenser la modification de l'angle de braquage.

Eventuellement, l'unité de traitement inhibe la modification de l'angle de braquage 200 lorsque le pilote manoeuvre le moyen de commande 50.

Ce mode de réalisation permet de contrôler la surface aérodynamique de manière transparente pour le pilote. Une action du pilote sur le moyen de commande 50 stoppe alors la mise en oeuvre de ce mode de réalisation pour laisser toute autorité au pilote.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

**1.** Procédé pour tendre à optimiser le bruit émis par un rotor auxiliaire (10) d'un giravion (1), ledit giravion (1) s'étendant longitudinalement le long d'un premier plan antéropostérieur (P1) séparant un premier côté (6) d'un deuxième côté (7) du giravion (1), ledit giravion (1) étant muni d'au moins un rotor principal (5), ledit giravion (1) étant muni d'un rotor auxiliaire (10) exerçant une poussée latérale (100) commandable pour le contrôle du mouvement en lacet du giravion (1), ladite poussée latérale (100) étant dirigée vers ledit deuxième côté (7) pour contrer un couple généré par ledit rotor principal (5) sur un fuselage (2) du giravion (1), ledit giravion (1) comprenant une installation motrice (90) pour mettre en rotation le rotor principal (5) et le rotor auxiliaire (10), ledit giravion (1) comprenant une dérive munie au moins partiellement d'une surface aérodynamique (25) braquable commandable en orientation et engendrant une portance transversale (111, 112) en s'étendant en élévation, ladite surface aérodynamique (25) présentant un angle de braquage (200) nul lorsque cette surface aérodynamique (25) est présente dans un deuxième plan (P2), ladite surface aérodynamique (25) ayant un bord de fuite (27),
**caractérisé en ce qu'**on contrôle l'angle de braquage (200) de ladite surface aérodynamique (25) pour diriger son bord de fuite (27) vers ledit deuxième côté (7) afin que la surface aérodynamique (25) présente un angle de braquage (200) négatif par rapport au deuxième plan (P2) ou pour diriger son bord de fuite (27) vers ledit premier côté (6) afin que la surface aérodynamique (25) présente un angle de braquage (200) positif par rapport au deuxième plan (P2), la surface aérodynamique (25) ayant pour fonction de faire tendre le rotor auxiliaire (10) vers au moins un point de fonctionnement prédéterminé visant à optimiser les performances du giravion et à minimiser le bruit généré par ce rotor auxiliaire (10), ledit contrôle de l'orientation de ladite surface aérodynamique étant réalisé au moins en fonction d'une valeur courante d'un paramètre de vitesse (V) du giravion (1) et d'une valeur courante d'un paramètre de puissance (W) de ladite installation motrice (90), ledit angle de braquage étant contrôlé en définissant :

- une première zone (Z1) pour laquelle l'angle de braquage (200) est maximal en atteignant un angle seuil positif ($\delta$max), cette première zone (Z1) étant atteinte à une vitesse d'avancement faible,
- une deuxième zone (Z2) pour laquelle l'angle de braquage (200) est maximal en atteignant l'angle seuil positif ($\delta$max), cette deuxième zone (Z2) étant atteinte à une vitesse d'avancement intermédiaire et à une puissance élevée (W2) développée par l'installation motrice,
- une troisième zone (Z3) pour laquelle l'angle de braquage (200) est positionné selon une orientation moyenne, cette troisième zone (Z3) étant atteinte à une vitesse d'avancement élevée et à une puissance élevée (W2) développée par l'installation motrice (90),

- une quatrième zone (Z4) pour laquelle l'angle de braquage (200) est faible en atteignant une valeur seuil négative (δmin), cette quatrième zone (Z4) étant atteinte à une vitesse d'avancement élevée et à une puissance faible (W1) développée par l'installation motrice.

2. Procédé selon la revendication 1,
**caractérisé en ce que** ledit paramètre de vitesse (V) est choisi dans une liste comprenant au moins : une vitesse air et une vitesse sol.

3. Procédé selon l'une quelconque des revendications 1 à 2,
**caractérisé en ce que**, ladite installation motrice (90) comprenant au moins un moteur (91) et une boîte de transmission de puissance (92) interposée entre chaque moteur (91) et le rotor principal (5), ledit paramètre de puissance est choisi dans une liste comprenant au moins : une puissance totale développée ledit au moins un moteur, un couple total généré par ledit au moins un moteur, une puissance transmise à ladite boîte de transmission de puissance, un couple transmis à ladite boîte de transmission de puissance, un couple exercé sur un mât entrainant ledit rotor principal.

4. Procédé selon l'une quelconque des revendications 1 à 3,
**caractérisé en ce qu'**on agence sur ledit giravion (1) une dérive (20) entièrement constituée de ladite surface aérodynamique (25), ou on agence sur ledit giravion une dérive (20) fixe munie d'au moins un volet (26) mobile représentant ladite surface aérodynamique (25) ou on agence sur ledit giravion (1) une dérive (20) mobile munie d'au moins un volet (26) mobile représentant conjointement ladite surface aérodynamique (25).

5. Procédé selon l'une quelconque des revendications 1 à 4,
**caractérisé en ce qu'**on incline ledit deuxième plan (P2) par rapport au premier plan antéropostérieur (P1) pour que ce deuxième plan (P2) présente une angulation positive par rapport au premier plan antéropostérieur (P1), ledit bord de fuite (27) étant dirigé vers ledit premier côté (6) lorsque ladite surface aérodynamique (25) est présente dans ledit deuxième plan (P2).

6. Procédé selon l'une quelconque des revendications 1 à 5,
**caractérisé en ce qu'**on confère à ladite surface aérodynamique (25) une cambrure positive, ladite surface aérodynamique (25) présentant une face (29) cambrée dirigée vers le deuxième côté (7).

7. Procédé selon l'une quelconque des revendications 1 à 6,
**caractérisé en ce qu'**on contrôle l'orientation de ladite surface aérodynamique (25) à l'aide d'une loi (L) fournissant un angle objectif (δ) de la surface aérodynamique (25) en fonction dudit paramètre de vitesse (V) du giravion (1) et dudit paramètre de puissance (W) de ladite installation motrice (90).

8. Procédé selon la revendication 7,
**caractérisé en ce que** ladite loi (L) comporte les équations suivantes :

$$\delta_1 = \begin{cases} V < V_1 \rightarrow \delta_{max} \\ V_1 \leq V < V_2 \rightarrow [sw] \cdot (A \cdot V + B) + [\delta_{max} - [sw] \cdot (A \cdot V + B)] \cdot \left\{ 1 - \left[ \sin\left(\frac{\pi}{2} \cdot \frac{V - V_1}{V_2 - V_1}\right) \right]^2 \right\} \\ V_2 \leq V \rightarrow [sw] \cdot (A \cdot V + B) \end{cases}$$

$$\delta_2 = \begin{cases} W < W_1 \rightarrow \delta_{min} \\ W_1 \leq W < W_2 \rightarrow \delta_1 - [\delta_1 - \delta_{min}] \cdot \left\{ \left[ \sin\left(\frac{\pi}{2} \cdot \frac{W - W_2}{W_2 - W_1}\right) \right]^2 \right\} \\ W_2 \leq W \rightarrow \delta_1 \end{cases}$$

$$\delta = \begin{cases} V > V_4 \rightarrow \delta_2 \\ V_3 < V \leq V_4 \rightarrow \delta_{max} - [\delta_{max} - \delta_2] \cdot \left\{ \left[ \sin\left( \frac{\pi}{2} \cdot \frac{V - V_3}{V_4 - V_3} \right) \right]^2 \right\} \\ V \leq V_3 \rightarrow \delta_{max} \end{cases}$$

où :

- "$\delta$" représente l'angle objectif,
- "$\delta 1$" et "$\delta 2$" représentent des paramètres de calcul,
- "$\delta max$" et "$\delta min$" représentent respectivement un angle seuil positif et un angle seuil négatif prédéterminés,
- "V1 ", "V2", "V3", "V4" représentent des paramètres de vitesse prédéterminés,
- "V" représente la valeur courante du paramètre de vitesse,
- "W1", "W2" représentent des paramètres de puissance prédéterminés,
- "W" représente la valeur courante du paramètre de puissance,
- "SW" représente un paramètre d'ajustement prédéterminé,
- "A" et "B" représentent des variables qui sont fonction dudit paramètre d'ajustement.

9. Procédé selon la revendication 8,
   **caractérisé en ce que** ledit paramètre d'ajustement (SW) est égal à une valeur prédéterminée, ledit angle de braquage (200) étant égal audit angle objectif ($\delta$).

10. Procédé selon la revendication 8,
    **caractérisé en ce que** :

    - on détermine un angle maximal (400) égal audit angle objectif en appliquant ladite loi (L) et en conférant au paramètre d'ajustement (SW) une première valeur,
    - on détermine un angle minimal (500) égal audit angle objectif en appliquant ladite loi (L) et en conférant au paramètre d'ajustement (SW) une deuxième valeur,
    - on mesure un pas collectif courant de pales (11) dudit rotor auxiliaire (10),
    - on augmente ledit angle de braquage (200) de la surface aérodynamique (25) en le faisant tendre vers ledit angle maximal (400) tant que ledit pas est supérieur à un pas de consigne prédéterminé, l'angle de braquage (200) étant borné pour être inférieur ou égal à l'angle maximal (400),
    - on diminue ledit angle de braquage (200) de la surface aérodynamique (25) en le faisant tendre vers ledit angle minimal (500) tant que ledit pas est inférieur au pas de consigne prédéterminé, l'angle de braquage étant borné pour être supérieur ou égal à l'angle minimal (500),
    - on modifie automatiquement ledit pas en parallèle de la modification dudit angle de braquage (200).

11. Procédé selon la revendication 10,
    **caractérisé en ce que**, ledit giravion (1) comportant un moyen de commande (50) manuel dudit pas, on inhibe la modification dudit angle de braquage (200) lorsque le pilote manoeuvre ledit moyen de commande (50)

12. Giravion (1) s'étendant longitudinalement le long d'un premier plan antéropostérieur (P1) séparant un premier côté (6) d'un deuxième côté (7) du giravion (1), ledit giravion (1) étant muni d'au moins un rotor principal (5), ledit giravion (1) étant muni d'un rotor auxiliaire (10) exerçant une poussée latérale (100) commandable pour le contrôle du mouvement en lacet du giravion (1), ladite poussée latérale (100) étant dirigée vers ledit deuxième côté (7) pour contrer un couple généré par ledit rotor principal (5) sur un fuselage (2) du giravion (1), ledit giravion (1) comprenant une installation motrice (90) pour mettre en rotation le rotor principal (5) et le rotor auxiliaire (10), ledit giravion (1) comprenant une dérive munie au moins partiellement d'une une surface aérodynamique (25) braquable commandable en orientation et engendrant une portance transversale (111, 112) en s'étendant en élévation, ladite surface aérodynamique (25) présentant un angle de braquage (200) nul lorsque cette surface aérodynamique (25) est présente dans un deuxième plan (P2), ladite surface aérodynamique (25) ayant un bord de fuite (27),
    **caractérisé en ce que** ledit giravion (1) comporte une unité de traitement (30) reliée à un moyen de déplacement (35) déplaçant en rotation ladite surface aérodynamique (25), l'unité de traitement (30) étant reliée à un premier système de mesure (41) d'une valeur courante d'un paramètre de vitesse (V) du giravion (1) et à un deuxième système de mesure (42) d'une valeur courante d'un paramètre de puissance (W) de ladite installation motrice (90), ladite unité de traitement (30) appliquant le procédé selon l'une quelconque des revendications 1 à 11.

**13.** Giravion selon la revendication 12,
**caractérisé en ce que** ledit giravion (1) comporte une dérive (20) braquable représentant ladite surface aérodynamique (25), ou une dérive (20) fixe munie d'au moins un volet (26) mobile représentant ladite surface aérodynamique (25) ou une dérive (20) mobile munie d'au moins un volet (26) mobile représentant conjointement ladite surface aérodynamique (25).

**14.** Giravion selon l'une quelconque des revendications 12 à 13,
**caractérisé en ce que** ledit deuxième plan (P2) présente une angulation positive (300) par rapport au premier plan antéropostérieur (P1), ledit bord de fuite (27) étant dirigé vers ledit premier côté (6) lorsque ladite surface aérodynamique (25) est présente dans ledit deuxième plan (P2).

**15.** Giravion selon l'une quelconque des revendications 12 à 14,
**caractérisé en ce que** ladite surface aérodynamique (25) comprend une cambrure positive, ladite surface aérodynamique (25) présentant une face cambrée (29) dirigée vers le deuxième côté (7).

**16.** Giravion selon l'une quelconque des revendications 12 à 15,
**caractérisé en ce que** ladite unité de traitement (30) comporte une mémoire (32) non volatile mémorisant une loi (L) fournissant un angle objectif ($\delta$) de la surface aérodynamique (25) en fonction dudit paramètre de vitesse (V) du giravion (1) et dudit paramètre de puissance (W) de ladite installation motrice (90).

**17.** Giravion selon l'une quelconque des revendications 12 à 16,
**caractérisé en ce que**, ledit giravion (1) comporte un moyen de commande (50) manuel du pas de pales du rotor auxiliaire (10), le moyen de commande (50) étant en communication avec ladite unité de traitement (30).

**Patentansprüche**

**1.** Verfahren mit dem Ziel der Optimierung des von einem Hilfsrotor (10) eines Drehflügelflugzeugs (1) erzeugten Lärms, wobei sich das Drehflügelflugzeug (1) in Längsrichtung entlang einer ersten anteroposterioren Ebene (P1) erstreckt, die eine erste Seite (6) von einer zweiten Seite (7) des Drehflügelflugzeugs (1) trennt, wobei das Drehflügelflugzeug (1) mit mindestens einem Hauptrotor (5) versehen ist, wobei das Drehflügelflugzeug (1) mit einem Hilfsrotor (10) versehen ist, der einen steuerbaren seitlichen Schub (100) zur Steuerung der Gierbewegung des Drehflügelflugzeugs (1) ausübt, wobei der seitliche Schub (100) zur zweiten Seite (7) hin gerichtet ist, um einem Drehmoment entgegenzuwirken, das von dem Hauptrotor (5) auf den Rumpf (2) des Drehflügelflugzeugs (1) erzeugt wird, wobei das Drehflügelflugzeug (1) eine Triebwerksanlage (90) aufweist zum Drehen des Hauptrotors (5) und des Hilfsrotors (10), wobei das Drehflügelflugzeug (1) ein Seitenleitwerk aufweist, welches zumindest teilweise mit einer einschlagbaren, bezüglich ihrer Ausrichtung steuerbaren aerodynamischen Fläche (25) versehen ist, die einen Querauftrieb (111, 112) erzeugt und sich in die Höhe erstreckt, wobei die aerodynamische Fläche (25) einen Einschlagwinkel (200) Null aufweist, wenn diese aerodynamische Fläche (25) in einer zweiten Ebene (P2) liegt, wobei die aerodynamische Fläche (25) eine Unterkante (27) aufweist,
**dadurch gekennzeichnet, dass** der Einschlagwinkel (200) der aerodynamischen Fläche (25) gesteuert wird, um ihre Hinterkante (27) zu der zweiten Seite (7) zu lenken, damit die aerodynamische Fläche (25) einen negativen Einschlagwinkel (200) relativ zu der zweiten Ebene (P2) einnimmt, oder um ihre Hinterkante (27) zur ersten Seite (6) zu lenken, damit die aerodynamische Fläche (25) einen positiven Einschlagwinkel (200) relativ zu der zweiten Ebene (P2) einnimmt, wobei die aerodynamische Fläche (25) die Funktion hat, darauf abzuzielen, den Hilfsrotor (10) zu mindestens einem vorbestimmten Betriebspunkt zu lenken, der die Leistungen des Drehflügelflugzeugs optimieren soll und der den von dem Hilfsrotor (10) erzeugten Lärm minimieren soll, wobei die Steuerung der Ausrichtung der aerodynamischen Fläche mindestens in Abhängigkeit von einem aktuellen Wert eines Geschwindigkeitsparameters (V) des Drehflügelflugzeugs (1) und einem aktuellen Wert eines Leistungsparameters (W) der Triebwerksanlage (90) ausgeführt wird, wobei der Einschlagwinkel gesteuert wird durch Definition:

- eines ersten Bereichs (Z1), für den der Einschlagwinkel (200) maximal ist, indem ein positiver Grenzwinkel ($\delta$max) erreicht wird, wobei dieser Bereich (Z1) bei einer geringen Vortriebsgeschwindigkeit erreicht wird,
- eines zweiten Bereichs (Z2), für den der Einschlagwinkel (200) maximal ist, indem der positive Grenzwinkel ($\delta$max) erreicht wird, wobei dieser zweite Bereich (Z2) bei einer mittleren Vortriebsgeschwindigkeit und einer erhöhten, von der Triebwerksanlage entwickelten Leistung (W2) erreicht wird,
- eines dritten Bereichs (Z3), für den der Einschlagwinkel (200) in einer mittleren Ausrichtung positioniert ist, wobei dieser dritte Bereich (Z3) bei einer hohen Vortriebsgeschwindigkeit und einer hohen, von der Triebwerksanlage (90) entwickelten Leistung (W2) erreicht wird,
- eines vierten Bereichs (Z4), für den der Einschlagwinkel (200) klein ist, indem ein negativer Grenzwert (δmin) erreicht wird, wobei dieser vierte Bereich (Z4) bei einer hohen Vortriebsgeschwindigkeit und einer geringen, von der Triebwerksanlage entwickelten Leistung (W1) erreicht wird.

2. Verfahren nach Anspruch 1,
**dadurch gekennzeichnet, dass** der Geschwindigkeitsparameter (V) aus einer Liste ausgewählt wird, die mindestens aufweist: eine Fluggeschwindigkeit und eine Geschwindigkeit über Grund.

3. Verfahren nach einem der Ansprüche 1 bis 2,
**dadurch gekennzeichnet, dass** die Triebwerksanlage (90) mindestens einen Motor (91) und ein Leistungsgetriebe (92), das zwischen jedem Motor (91) und dem Hauptrotor (5) angeordnet ist, aufweist, wobei der Leistungsparameter ausgewählt wird aus einer Liste, die mindestens aufweist: eine von dem mindestens einen Motor entwickelte Gesamtleistung, ein von dem mindestens einen Motor entwickeltes Gesamtdrehmoment, eine auf das Leistungsgetriebe übertragene Leistung, ein auf das Leistungsgetriebe übertragenes Drehmoment, ein Drehmoment, welches auf eine Welle ausgeübt wird, die den Hauptrotor antreibt.

4. Verfahren nach einem der Ansprüche 1 bis 3,
**dadurch gekennzeichnet, dass** auf dem Drehflügelflugzeug ein Seitenleitwerk (20) angeordnet wird, das vollständig aus der aerodynamischen Fläche (25) besteht oder auf dem Drehflügelflugzeug ein feststehendes Seitenleitwerk (20) angeordnet wird, das mit mindestexas einer beweglichen Klappe (26) versehen ist, die die aerodynamische Fläche (25) darstellt, oder auf dem Drehflügelflugzeug (1) ein bewegliches Seitenleitwerk (20) angebracht wird, das mit mindestens einer beweglichen Klappe (26) versehen ist, die zusammen die aerodynamische Fläche (25) darstellen.

5. Verfahren nach einem der Ansprüche 1 bis 4,
**dadurch gekennzeichnet, dass** die zweite Ebene (P2) relativ zu der ersten anteroposterioren Ebene (P1) geneigt wird, damit diese zweite Ebene (P2) eine positive Winkelstellung relativ zu der ersten anteroposterioren Ebene (P1) einnimmt, wobei die Hinterkante (27) zu der ersten Seite (6) gelenkt wird, wenn die aerodynamische Fläche (25) in der zweiten Ebene (P2) liegt.

6. Verfahren nach einem der Ansprüche 1 bis 5,
dadurch gekenntzeichnet, dass der aerodynamischen Fläche (25) eine positive Krümmung gegeben wird, wobei die aerodynamische Fläche (25) eine gebogene, auf die zweite Seite (7) gerichtete Fläche darstellt.

7. Verfahren nach einem der Ansprüche 1 bis 6,
**dadurch gekennzeichnet, dass** die Ausrichtung der aerodynamischen Fläche (25) mit Hilfe einer Regel (L) gesteuert wird, die einen objektiven Winkel der aerodynamischen Fläche (25) in Abhängigkeit von dem Geschwindigkeitsparameter (V) des Drehflügelflugzeugs (1) und dem Leistungsparameter (W) der Triebwerksanlage (90) liefert.

8. Verfahren nach Anspruch 7,
**dadurch gekennzeichnet, dass** die Regel folgende Gleichungen aufweist:

$$\delta_1 = \begin{cases} V < V_1 \rightarrow \delta_{max} \\ V_1 \leq V < V_2 \rightarrow [sw] \cdot (A \cdot V + B) + [\delta_{max} - [sw] \cdot (A \cdot V + B)] \cdot \left\{ 1 - \left[ \sin\left( \frac{\pi}{2} \cdot \frac{V - V_1}{V_2 - V_1} \right) \right]^2 \right\} \\ V_2 \leq V \rightarrow [sw] \cdot (A \cdot V + B) \end{cases}$$

$$\delta_2 = \begin{cases} W < W_1 \rightarrow \delta_{min} \\ W_1 \leq W < W_2 \rightarrow \delta_1 - [\delta_1 - \delta_{min}] \cdot \left\{ \left[ \sin\left( \frac{\pi}{2} \cdot \frac{W - W_2}{W_2 - W_1} \right) \right]^2 \right\} \\ W_2 \leq W \rightarrow \delta_1 \end{cases}$$

$$\delta = \begin{cases} V > V_4 \rightarrow \delta_2 \\ V_3 < V \le V_4 \rightarrow \delta_{max} - [\delta_{max} - \delta_2] \cdot \left\{ \left[ \sin\left( \frac{\pi}{2} \cdot \frac{V - V_3}{V_4 - V_3} \right) \right]^2 \right\} \\ V \le V_3 \rightarrow \delta_{max} \end{cases}$$

wobei:

- "$\delta$" den objektiven Winkel bezeichnet,
- "$\delta 1$" und "$\delta 2$" Berechnungsparameter bezeichnen,
- "$\delta max$" und "$\delta min$" jeweils einen positiven und einen negativen vorbestimmten Grenzwinkel bezeichnen,
- "V1", "V2", "V3", "V4" vorbestimmte Geschwindigkeitsparameter bezeichnen,
- "V" den aktuellen Wert des Geschwindigkeitsparameters bezeichnet,
- "W1", "W2" vorbestimmte Leistungsparameter bezeichnen,
- "W" den aktuellen Wert des Leistungsparameters bezeichnet,
- "SW" einen vorbestimmten Justierparameter bezeichnet,
- "A" und "B" Variablen bezeichnen, die von dem Justierparameter abhängen.

9. Verfahren nach Anspruch 8,
**dadurch gekennzeichnet, dass** der Justierparameter (SW) gleich einem vorbestimmten Wert ist, wobei der Einschlagwinkels (200) gleich dem objektiven Winkel ($\delta$) ist.

10. Verfahren nach Anspruch 8,
**dadurch gekennzeichnet, dass**

- man einen maximalen Winkel (400) bestimmt, der gleich dem objektiven Winkel ist, indem die Regel (L) angewendet wird und indem dem Justierparameter (SW) ein erster Wert zugeordnet wird,
- man einen minimalen Winkel (500) bestimmt, der gleich dem objektiven Winkel ist, indem die Regel (L) angewendet wird und indem dem Justierparameter (SW) ein zweiter Wert zugeordnet wird,
- man einen aktuellen kollektiven Anstellwinkel der Rotorblätter (11) des Hilfsrotors (10) misst,
- man den Einschlagwinkel (200) der aerodynamischen Fläche (25) erhöht, indem man ihn auf den Maximalwinkel (400) zu bewegt, bis der Anstellwinkel größer ist als ein vorbestimmter Soll-Anstellwinkel, wobei der Einschlagwinkel (200) eingeschränkt ist, um kleiner oder gleich einem Maximalwinkel (400) zu sein,
- der Einschlagwinkel (200) der aerodynamischen Fläche (25) vermindert wird, indem man ihn auf den minimalen Winkel (500) zu bewegt, bis der Anstellwinkel kleiner ist als der vorbestimmte Soll-Anstellwinkel, wobei der Einschlagwinkel begrenzt ist, um größer oder gleich dem Minimalwinkel (500) zu sein,
- man automatisch den Anstellwinkel parallel zu der Veränderung des Einschlagwinkels (200) verändert.

11. Verfahren nach Anspruch 10,
**dadurch gekennzeichnet, dass** das Drehflügelflugzeug (1) ein manuelles Steuermittel (50) des Anstellwinkels aufweist, wobei man die Veränderung des Einschlagwinkels (200) verhindert, wenn der Pilot das Steuermittel (50) bedient.

12. Drehflügelflugzeug (1), das sich in Längsrichtung entlang einer anteroposterioren Ebene (P1) erstreckt, die eine erste Seite (6) von einer zweiten Seite (7) des Drehflügelflugzeugs (1) trennt, wobei das Drehflügelflugzeug (1) mit mindestens einem Hauptrotor (5) versehen ist, wobei das Drehflügelflugzeug (1) mit einem Hilfsrotor (10) versehen ist, der einen steuerbaren seitlichen Schub (100) für die Steuerung der Gierbewegung des Drehflügelflugzeugs (1) ausübt, wobei der seitliche Schub (100) auf die zweite Seite (7) gerichtet ist, um einem Drehmoment entgegenzuwirken, das von dem Hauptrotor (5) auf einen Rumpf (2) des Drehflügelflugzeugs (1) ausgeübt wird, wobei das Drehflügelflugzeug (1) eine Triebwerksanlage (90) aufweist, um den Hauptrotor (5) und den Hilfsrotor (10) zu drehen, wobei das Drehflügelflugzeug (1) ein Seitenleitwerk aufweist, das mindestens teilweise mit einer aerodynamischen Fläche (25) versehen ist, die einschlagbar und in ihrer Ausrichtung steuerbar ist und einen Querauftrieb (111, 112) erzeugt und sich in die Höhe erstreckt, wobei die aerodynamische Fläche (25) einen Einschlagwinkel (200) Null aufweist, wenn diese aerodynamische Fläche (25) in der zweiten Ebene (P2) liegt, wobei die aerodynamische Fläche (25) eine Hinterkante (27) aufweist,
**dadurch gekennzeichnet, dass** das Drehflügelflugzeug (1) eine Verarbeitungseinheit (30) aufweist, die mit einem Bewegungsmittel (35) verbunden ist, das die aerodynamische Fläche (25) drehbewegt, wobei die Verarbeitungseinheit (30) mit einem ersten System (41) zur Messung eines aktuellen Werts eines Geschwindigkeitsparameters des Drehflügelflugzeugs (1) und mit einem zweiten System (42) zur Messung eines aktuellen Werts eines Leistungsparameters (W) der Triebwerksanalage (90) verbunden ist, wobei die Verarbeitungseinheit (30) das Verfahren nach einem der Ansprüche 1 bis 11 ausführt.

13. Drehflügelflugzeug nach Anspruch 12,
**dadurch gekennzeichnet, dass** das Drehflügelflugzeug (1) ein einschlagbares Seitenleitwerk (20) aufweist, das die aerodynamische Fläche (25) darstellt, oder ein feststehendes Seitenleitwerk (20) mit mindestens einer beweglichen Klappe (26), die die aerodynamische Fläche (25) darstellt, oder ein bewegliches Seitenleitwerk (20), das mit mindestens einer beweglichen Klappe (26) versehen ist, welche zusammen die aerodynamische Fläche (25) darstellen.

14. Drehflügelflugzeug nach einem der Ansprüche 12 bis 13,
**dadurch gekennzeichnet, dass** die zweite Ebene (P2) eine positive Winkelstellung (300) relativ zu der ersten anteroposterioren Ebene (P1) einnimmt, wobei die Hinterkante (27) auf die erste Seite (6) hin gerichtet ist, wenn die aerodynamische Fläche (25) in der zweiten Ebene (P2) liegt.

15. Drehflügelflugzeug nach einem der Ansprüche 12 bis 14,
**dadurch gekennzeichnet, dass** die aerodynamische Fläche (25) eine positive Krümmung aufweist, wobei die aerodynarnische Fläche (25) eine gebogene Fläche (29) aufweist, die auf die zweite Seite (7) hin gerichtet ist.

16. Drehflügelflugzeug nach einem der Ansprüche 12 bis 15,
**dadurch gekennzeichnet, dass** die Verarbeitungseinheit (30) einen nichtflüchtigen Speicher (32) aufweist, der eine Regel (L) speichert, die einen objektiven Winkel ($\delta$) der aerodynamischen Fläche (25) in Abhängigkeit von dem Geschwindigkeitsparameter (V) des Drehflügelflugzeugs (1) und von dem Leistungsparameter (W) der Triebwerksanlage (90) liefert.

17. Drehflügelflugzeug nach einem der Ansprüche 12 bis 16,
**dadurch gekennzeichnet, dass** das Drehflügelflugzeug (1) ein manuelles Steuermittel (50) des kollektiven Anstellwinkels der Rotorblätter des Hilfsrotors (10) aufweist, wobei das Steuermittel (50) mit der Verarbeitungseinheit (30) in Verbindung steht.

**Claims**

1. Method for aiming to optimise the noise emitted by an auxiliary rotor (10) of a rotorcraft (1), said rotorcraft (1) extending longitudinally along a first anteroposterior plane (P1) separating a first side (6) from a second side (7) of the rotorcraft (1), said rotorcraft (1) being provided with at least one main rotor (5), said rotorcraft (1) being provided with an auxiliary rotor (10) exerting a lateral thrust (100) controllable in order to control the yaw movement of the rotorcraft (1), said lateral thrust (100) being directed towards said second side (7) in order to counter a torque generated by said main rotor (5) on a fuselage (2) of the rotorcraft (1), said rotorcraft (1) comprising a power plant (90) for setting in rotation the main rotor (5) and the auxiliary rotor (10), said rotorcraft (1) comprising a tail fin provided at least partly with a deflectable aerodynamic surface (25) controllable in orientation and generating a transverse lift (111, 112) on extending in elevation, said aerodynamic surface (25) having a zero deflection angle (200) when said aerodynamic surface (25) is present in a second plane (P2), said aerodynamic surface (25) having a trailing edge (27),
**characterised in that** the deflection angle (200) of said aerodynamic surface (25) is controlled to direct its trailing edge (27) towards said second side (7) so that the aerodynamic surface (25) has a negative deflection angle (200) relative to the second plane (P2) or to direct its trailing edge (27) towards said first side (6) so that the aerodynamic surface (25) has a positive deflection angle (200) relative to the second plane (P2), the aerodynamic surface (25) having the function of causing the auxiliary rotor (10) to tend towards at least one predetermined operating point seeking to optimise the performance of the rotorcraft and to minimise the noise generated by the auxiliary rotor (10), said control of the orientation of said aerodynamic surface being performed at least as a function of a current value of a speed parameter (V) of the rotorcraft (1) and of a current value of a power parameter (W) of said power plant (90), said deflection angle being controlled by defining:

- a first zone (Z1) for which the deflection angle (200) is at a maximum on reaching a positive threshold angle ($\delta$max), the first zone (Z1) being reached at a low forward speed,

- a second zone (Z2) for which the deflection angle (200) is at a maximum on reaching the positive threshold angle (δmax), the second zone (Z2) being reached at an intermediate forward speed and at a high power (W2) developed by the power plant,
- a third zone (Z3) for which the deflection angle (200) is positioned at a medium orientation, the third zone (Z3) being reached at a high forward speed and at a high power (W2) developed by the power plant (90),
- a fourth zone (Z4) for which the deflection angle (200) is small on reaching a negative threshold value (δmin), the fourth zone (Z4) being reached at a high forward speed and at a low power (W1) developed by the power plant.

2. Method according to claim 1,
**characterised in that** said speed parameter (V) is selected from a list comprising at least: an air speed and a ground speed.

3. Method according to any one of claims 1 to 2, **characterised in that**, said power plant (90) comprising at least one engine (91) and a power transmission gearbox (92) interposed between each engine (91) and the main rotor (5), said power parameter is selected from a list comprising at least: a total power developed by said at least one engine, a total torque generated by said at least one engine, a power transmitted to said power transmission gearbox, a torque transmitted to said power transmission gearbox, a torque exerted on a mast driving said main rotor.

4. Method according to any one of claims 1 to 3,
**characterised in that** a tail fin (20) constituted entirely by said aerodynamic surface (25) is arranged on said rotorcraft (1), or a fixed tail fin (20) provided with at least one movable flap (26) representing said aerodynamic surface (25) is arranged on said rotorcraft or a movable tail fin (20) provided with at least one movable flap (26) jointly representing said aerodynamic surface (25) is arranged on said rotorcraft (1).

5. Method according to any one of claims 1 to 4,
**characterised in that** said second plane (P2) is inclined relative to the first anteroposterior plane (P1) so that the second plane (P2) has a positive angle relative to the first anteroposterior plane (P1), said trailing edge (27) being directed towards said first side (6) when said aerodynamic surface (25) is present in said second plane (P2).

6. Method according to any one of claims 1 to 5,
**characterised in that** a positive camber is imparted to said aerodynamic surface (25), said aerodynamic surface (25) having a cambered face (29) directed towards the second side (7).

7. Method according to any one of claims 1 to 6,
**characterised in that** the orientation of said aerodynamic surface (25) is controlled with the help of a relationship (L) providing a target angle (δ) for the aerodynamic surface (25) as a function of said speed parameter (V) of the rotorcraft (1) and of said power parameter (W) of said power plant (90).

8. Method according to claim 7,
**characterised in that** said relationship (L) comprises the following equations:

$$\delta_1 = \begin{cases} V < V_1 \rightarrow \delta_{max} \\ V_1 \leq V < V_2 \rightarrow [sw] \cdot (A \cdot V + B) + [\delta_{max} - [sw] \cdot (A \cdot V + B)] \cdot \left\{ 1 - \left[ \sin\left(\frac{\pi}{2} \cdot \frac{V - V_1}{V_2 - V_1}\right) \right]^2 \right\} \\ V_2 \leq V \rightarrow [sw] \cdot (A \cdot V + B) \end{cases}$$

$$\delta_2 = \begin{cases} W < W_1 \rightarrow \delta_{min} \\ W_1 \leq W < W_2 \rightarrow \delta_1 - [\delta_1 - \delta_{min}] \cdot \left\{ \left[ \sin\left(\frac{\pi}{2} \cdot \frac{W - W_2}{W_2 - W_1}\right) \right]^2 \right\} \\ W_2 \leq W \rightarrow \delta_1 \end{cases}$$

$$\delta = \begin{cases} V > V_4 \rightarrow \delta_2 \\ V_3 < V \leq V_4 \rightarrow \delta_{max} - [\delta_{max} - \delta_2] \cdot \left\{ \left[ \sin\left(\frac{\pi}{2} \cdot \frac{V - V_3}{V_4 - V_3}\right) \right]^2 \right\} \\ V \leq V_3 \rightarrow \delta_{max} \end{cases}$$

where:

- "$\delta$" represents the target angle,
- "$\delta 1$" and "$\delta 2$" represent calculation parameters,
- "$\delta max$" and "$\delta min$" represent respectively a predetermined positive threshold angle and a predetermined negative threshold angle,
- "V1", "V2", "V3", "V4" represent predetermined speed parameters,
- "V" represents the current value of the speed parameter,
- "W1", "W2" represent predetermined power parameters,
- "W" represents the current value of the power parameter,
- "SW" represents a predetermined adjustment parameter,
- "A" and "B" represent variables which are a function of said adjustment parameter.

9. Method according to claim 8,
   **characterised in that** said adjustment parameter (SW) is equal to a predetermined value, said deflection angle (200) being equal to said target angle ($\delta$).

10. Method according to claim 8,
    **characterised in that**:

    - a maximum angle (400) equal to said target angle is determined by applying said relationship (L) and by imparting a first value to the adjustment parameter (SW),
    - a minimum angle (500) equal to said target angle is determined by applying said relationship (L) and by imparting a second value to the adjustment parameter (SW),
    - a current collective pitch of blades (11) of said auxiliary rotor (10) is measured,
    - said deflection angle (200) of the aerodynamic surface (25) is increased by causing it to tend towards said maximum angle (400) so long as said pitch is greater than a predetermined setpoint pitch, the deflection angle (200) being limited to be less than or equal to the maximum angle (400),
    - said deflection angle (200) of the aerodynamic surface (25) is decreased by causing it to tend towards said minimum angle (500) so long as said pitch is less than the predetermined setpoint pitch, the deflection angle being limited to be greater than or equal to the minimum angle (500),
    - said pitch is automatically modified in parallel with the modification of said deflection angle (200).

11. Method according to claim 10,
    **characterised in that**, said rotorcraft (1) comprising a control means (50) for manual control of said pitch, the modification of said deflection angle (200) is inhibited when the pilot operates said control means (50).

12. Rotorcraft (1) extending longitudinally along a first anteroposterior plane (P1) separating a first side (6) from a second side (7) of the rotorcraft (1), said rotorcraft (1) being provided with at least one main rotor (5), said rotorcraft (1) being provided with an auxiliary rotor (10) exerting a lateral thrust (100) controllable in order to control the yaw movement of the rotorcraft (1), said lateral thrust (100) being directed towards said second side (7) in order to counter a torque generated by said main rotor (5) on a fuselage (2) of the rotorcraft (1), said rotorcraft (1) comprising a power plant (90) for setting in rotation the main rotor (5) and the auxiliary rotor (10), said rotorcraft (1) comprising a tail fin provided at least partly with a deflectable aerodynamic surface (25) controllable in orientation and generating a transverse lift (111, 112) on extending in elevation, said aerodynamic surface (25) having a zero deflection angle (200) when said aerodynamic surface (25) is present in a second plane (P2), said aerodynamic surface (25) having a trailing edge (27),
    **characterised in that** said rotorcraft (1) comprises a processing unit (30) connected to a movement means (35) moving in rotation said aerodynamic surface (25), the processing unit (30) being connected to a first measurement system (41) for measuring a current value of a speed parameter (V) of the rotorcraft (1) and to a second measurement system (42) for measuring a current value of a power parameter (W) of said power plant (90), said processing unit (30) applying the method according to any one of claims 1 to 11.

13. Rotorcraft according to claim 12,
**characterised in that** said rotorcraft (1) comprises a deflectable tail fin (20) representing said aerodynamic surface (25), or a stationary tail fin (20) provided with at least one movable flap (26) representing said aerodynamic surface (25) or a movable tail fin (20) provided with at least one movable flap (26) jointly representing said aerodynamic surface (25).

14. Rotorcraft according to any one of claims 12 to 13,
**characterised in that** said second plane (P2) has a positive angle (300) relative to the first anteroposterior plane (P1), said trailing edge (27) being directed towards said first side (6) when said aerodynamic surface (25) is present in said second plane (P2).

15. Rotorcraft according to any one of claims 12 to 14,
**characterised in that** said aerodynamic surface (25) comprises a positive camber, said aerodynamic surface (25) having a cambered face (29) directed towards the second side (7).

16. Rotorcraft according to any one of claims 12 to 15,
**characterised in that** said processing unit (30) comprises a non-volatile memory (32) storing a relationship (L) providing a target angle ($\delta$) for the aerodynamic surface (25) as a function of said speed parameter (V) of the rotorcraft (1) and of said power parameter (W) of said power plant (90).

17. Rotorcraft according to any one of claims 12 to 16,
**characterised in that**, said rotorcraft (1) comprises a control means (50) for manual control of the pitch of blades of the auxiliary rotor (10), the control means (50) being in communication with said processing unit (30).

Fig.1

Fig.2

Fig.3

Fig.4

# Fig.5

## Fig.6

## Fig.7

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2338845
- EP 0867364 A
- US 6290171 B
- EP 1547919 A
- EP 0566452 A
- DE 1144116
- US 2012104156 A